# EUROPEAN PATENT APPLICATION

(11) **EP 1 721 938 A2**
(43) Date of publication of application: **15.11.2006**
(21) Application number: 06009812.6
(22) Date of filing: 12.05.2006
(51) Int. Cl.: C08L 95/00, C08K 3/34, C08L 93/04

(54) **Emulsifier for bituminous binders**

(30) Priority: 13.05.2005 ES 200501168
(71) Applicant: KAO CORPORATION, S.A., 08210 Barbera del Vallés - Barcelona (ES); TOLSA S.A., E-28001 Madrid (ES)
(72) Inventor: Alvarez Berenguer, Antonio, 28001 Madrid (ES); Limpo Orozco, Francisco Javier, 28001 Madrid (ES); Pérez Gonzales, Manuel, 28001 Madrid (ES); Izquierdo Martinez, Laura, 28001 Madrid (ES); Punet Plensa, Antoni, 08210 Barbera del Vallés Barcelona (ES); Lozano Salvatella, Lluis, 08210 Barbera del Vallés Barcelona (ES)
(74) Representative: ABG Patentes, S.L.

(57) **Abstract**

The present invention relates to bitumen emulsifying agents and the forms of usage thereof, and, more particularly, to a mixture of a mineral product from the silicate family and a rosin derivative, and the use of said mixture as a bitumen emulsifying agent, producing anionic bitumen emulsions in water which exhibit high stability, low sedimentation and adequate rheological features; the sectors for which these emulsions are designed being surface waterproofing and road paving.

## Description

### Field of the invention

The present invention belongs to the field of bitumen emulsifying agents or emulsifiers and the forms of usage thereof, and, more particularly, to a mixture of a mineral product from the phyllosilicate group and a rosin derivative and the use of said mixture as a bitumen emulsifying agent, producing anionic bitumen emulsions in water which exhibit high stability, low sedimentation and adequate rheological features; the sectors for which these emulsions are designed being surface waterproofing and road paving.

### Prior state of the art

Since old times, bituminous products produced from petroleum and coal have been used, combined with different types of additives, in the construction sector, and they have been very useful as waterproofing agents, in road paving and as coaling materials in general.

At ambient temperature, bituminous produtcs are solids or plastic compounds with very high viscosity, which makes the direct application thereof on the surfaces to be coated very difficult. For this reason, before they can be used, it is necessary to convert them into liquid compounds with reduced viscosity. In this regard, there are various possible methods designed to obtain a liquid product which favours application. One of these methods consists of heating them in order to thus reduce their viscosity, which entails high-temperature application, with the consequent handling risks, Another method consists of mixing them with organic solvents, achieving dilution of the asphalt, wherefrom, once spread on the surface to be covered, the solvents evaporate into the atmosphere, leaving the solid film. Although this method does not entail risks related to high-temperature handling, it is a highly-polluting process due to the evaporation of the organic solvents into the atmosphere. The least polluting and safest method for application consists of emulsifying the bituminous component in water, forming a reduced-viscosity aqueous emulsion of the bituminous component which can be easily applied with the usual techniques in the painting industry, either by mechanical spreading using paintbrushes, rollers or ruler guides, or else by spattering or spraying the product onto the surface to be treated.

An emulsion is formed by the homogeneous dispersion of a liquid, in the form of small drops, in another liquid which is not miscible with the first. The set of small drops is known as the disperse phase, whereas the medium wherein they are dispersed constitutes the continuous phase. In order for this disperse phase of drops to remain stable, without a tendency to reagglomerate, it is necessary to use an emulsifying additive, also known as emulsifier.

Bituminous emulsions are dispersions of small particles of a hydrocarbon binder in a solution of water and an anionic, cationic, or non-ionic emulsifying agent, which determines the name given to the emulsion.

Emulsifiers tend to be surfactant agents which exhibit a polar and an apolar part, act as electrolytes and, upon coming into contact with water, are dissociated, such that the apolar part binds with the bitumen and the polar part binds with the aqueous phase. As a result of the chemical structure and the action mechanism of these additives, they have a three-fold function in the emulsion:
i) To reduce the surface tension in order to facilitate formation of the emulsion.
ii) To stabilise the emulsion, by superficially protecting the bitumen particles with electrical charges, which makes it possible for the particles to repel one another.
iii) To ionically activate the bituminous binder, favouring the coating of aggregates on the work site, in order that, following breakage of the emulsion, the binder maintains acceptable conditions of resistance to displacement by water through time.

Depending on the charge exhibited by the apolar part of the emulsifying compound, the latter is said to be anionic, if the bitumen is negatively charged, or cationic, if the bitumen is positively charged. The emulsifying agent may also be non-ionic if it does not have the capability to become ionised.

The anionic emulsifiers that are normally used are derived from sodium or potassium salts produced from long-chain fatty acids and lignins derived from wood, as well as sulfonate-type anionic surfactants, such as the sodium or potassium salts of alkylsulfonic, alkylhydroxysulfonic or alkenylsulfonic acids, linear sodium alkylbenzenesulfonate, alkyl sulfates, etc., whereas cationic emulsifiers are normally acid salts of diamines, polyamines, imidazolines, fatty acid amidoamines and quaternary ammonium salts.

One of the commonly used anionic emulsifiers is the Vinsol® resin, commercialised by Hercules. It is a natural acid resin, composed of phenolic derivatives, terpenes and resin acids, extracted from pine bark, which, following neutralisation with sodium or potassium hydroxide, forms a soluble anionic soapy water that is used as an anionic emulsifier for bituminous emulsions. This type of resin is the most widely used because it has excellent technical features. Since it is a natural product, the production thereof is dependent on climatic and environmental conditions, which, together with the difficulty of obtainment, lead to iL having a high price and being scarce in the market, without there being, thus far, an alternative product with similar features.

Stabilisation of the emulsion is important up to the time of usage, it being therefore necessary to know how the various transport, storage and application factors affect the equilibrium between the continuous and the discontinuous phase. Following application, this equilibrium must be broken, leading to coalescence, with the bitumen maintaining its initial binding properties, forming a continuous asphalt film. Depending on the rate at which this water - bitumen equilibrium is broken, the emulsion will be fast- (EAR), medium- (EAM) or slow-breaking (EAL), with the latter type exhibiting the greatest stability upon contact with the aggregates.

The viscosity of bituminous emulsions is regulated on the basis of the application wherein they are to be used. The use of a microfibrous silicate, such as sepiolite, in bituminous emulsions is limited, due to the nature of clays, to anionic mixtures, and they arc currently used when the emulsion is to have adequate consistency, flow and viscosity properties. Moreover, the emulsifying properties of sepiolite are limited or practically null when used by itself.

Therefore, it is necessary to develop emulsifying agents which offer improved technical features and which may overcome the environmental and economic problems and those related to the difficulty of obtainment of existing agents in the current state of the art.

### Object of the invention

The present invention offers an improved alternative to conventional emulsifiers used thus far, since it discloses an emulsifier which makes it possible to achieve implementation and final qualities superior to those developed in the current state of the art, whilst reducing the total cost of the final compositions.

Thus, one object of the present invention relates to an emulsifying agent to form anionic bituminous emulsions which comprises a mixture of a) aL least, one solid mineral component from the phyllosilicate group and b) at least, one rosin derivative.

A second object of the present invention relates to a process for preparing the emulsifying agent by mixing components a) and b) in a high-efficiency solids mixer.

Another object of the invention relates to the use of the emulsifying agent as a suspension, stability and thickening agent in anionic bituminous emulsion formulations.

This invention also includes the aqueous solutions which comprise the emulsifying agent as well as the use of said solutions as emulsifiers for bituminous binders.

The sixth object of the invention is a bituminous emulsion which comprises the previously defined emulsifying agent, either as the main emulsifying agent or as an additive which improves the emulsifying efficiency.

A final object of the invention relates to the use of said bituminous emulsions for surface waterproofing and road paving.

### Description of the invention

The emulsifying agent for anionic bituminous emulsions described in this invention comprises at least one solid mineral component from the phyllosilicate group and at least one rosin derivative.

The emulsifying agent, in accordance with this invention, is characterised in that it comprises, in the quantities shown, expressed as weight percentages,
- 20-75%, and more preferably 35-60% by weight of the mineral component (a);
- 25-80%, and more preferably 40-65% by weight of a rosin derivative (b)
with respect to the total weight of the mixture.

The inventors have observed a surprising synergic effect in the properties of the mixture of the components of the emulsifier in the invention, which does not take place upon increasing the dosage of the rosin derivative, when the latter is used by itself, nor with the mineral component, since the latter does noL exhibit emulsifying properties by itself.

### Mineral component

In accordance with the invention, the mineral component is a mineral component from the phyllosilicate group, selected from rheological-grade clays, such as bentonite or montmorillonite, attapulgite, diatomites, sepiolite and mixtures thereof. Preferably, the rheological-grade clay i.s sepiolite.

Chemically, sepiolite corresponds to a hydrated magnesium silicate which mineralogically belongs to the phyllosilicate group and has as ideal formula Si₁₂Mg₈O₄ (OH)₄ (HO₂)₄.8H₂0. Structurally, sepiolite is a 2:1-type phyllosilicate, with a layer of magnesium octahedrons between two layers of silicon tetrahedrons. Unlike other members of the group, such as smectites or bentonites, sepiolite has a longitudinal structure rather than a laminar structure. This is due to the fact that, transversely, every six silicon atoms there is an inversion of the tetrahedron layer, whilst continuity is preserved longitudinally.

Rheological-grade sepiolite, produced from natural sepiolite by means of wet micronisation processes, is easily dispersed in water and other polar liquids, and exhibits an exterior surface with numerous irregularities. This leads to a very high specific surface for a natural product (greater than 300 m²/g) and a high density of active adsorption centres, resulting in a very high retention capacity for water and polar molecules, which are able to form, in a relatively easy manner, hydrogen bridges with said active centres. Due to the microfibrous nature of rheological-grade sepiolite particles, sepiolite has a high porosity and a low apparent density. Normally, rheological-grade sepiolite exhibits a particle size granulometric distribution of less than 100 µm, preferably less than 75 µm. The particle size can be measured using a laser dispersion particle size analyser (for example, the Master Sizer 2000 model manufactured by Malvern Instruments) and is expressed as the mean diameter in microns (µm).

European patent application EP-A-0170299 discloses an adequate rheological-grade sepiolite as component (a) of the emulsifier described in this invention.

### Rosin derivative

Rosin is a natural product that is composed of mixed unsaturated acids with small proportions of non-acid components. Rosin acids are primarily monobasic carboxylic acids which contain a phenanthrene skeleton with 20 carbon atoms in the molecule (abietic, levopimeric and similar acids). The difference between the acids is the number and the position of the double bonds. They are solid and normally transparent, with a vitreous appearance. Depending on the amount of impurities which they contain, the colour varies from light yellow to dark grey.

Natural rosin may be classified in terms of its origin, namely, as pine resin rosin, wood rosin or "tall-oil" (resin oil) rosin.

Rosin is normally produced by means of the following procedures:
1) separation of the volatile terpenic components (turpentine ossence and terpenic solvents) during distillation of the oleoresinous materials previously collected as exudates from pines and other conifers (pine resin, pitch, bars, etc.)
2) extraction with solvents from the pine stumps
3) fraction distillation of the "tall-oil", a subproduct in paper pulp industries.

Rosin may be raw, untreated rosin, or it may be hydrogenated, deproportionated (dismuted) or polymerised prior to obtaining the derivatives thereof.

The acidity index (number of milligrams of potassium hydroxide necessary to neutralise the free acids in 1 gram of sample) and the saponification index (number of milligrams of potassium hydroxide necessary to neutralise the free acids and saponify the esters present in 1 g of sample) are indicative of the good quality of rosin. Preferably, rosin exhibits an acidity index of between 160-210 mg KOH/g (in accordance with the ASTM D 485-92 standard) and a saponification index between 170-210 KOH/g (in accordance with the ASTM D 464-92 standard).

In accordance with this invention, the rosin derivatives are produced by means of well-known methods to persons skilled in the art. Thus, in a preferred embodiment of the invention, rosin is initially grafted with an unsaturated carboxylic acid or anhydride. Preferably, the carboxylic acid is an α, β-ethylenically unsaturated carboxylic acid which is grafted onto rosin by reaction with the unsaturation of the rosin acids. A normal reaction between the unsaturated acid and the rosin acid is the build-up reaction. In this reaction, a Diels-Alder adduct is formed from a conjugated double bond of the rosin acid and the α,β-unsaturated carboxylic acid or anhydride. Adequate acids include fumaric acid and the hemiesters thereof, maleic acid (and anhydride) and the hemiesters thereof, acrylic acid, methacrylic acid, and related acrylic and arylic acids, itaconic acid (and anhydride) and oligomers and copolymers of acrylic compounds and vinyls with ethylenically unsaturated acids (for example, copolymers of styrene/acrylic acids, etc.). Preferably, the carboxylic, acid is an α,β-unsaturated dicarboxylic acid or anhydride, amongst which one may highlight fumaric acid and maleic acid (and anhydride).

The unsaturated carboxylic acid is made to react with each rosin in a molar ratio of 0.05:1 to 1.5:1, preferably 0.4:1 to 1.2:1. The reaction temperature ranges from approximately 170°C to approximately 220°C.

In a second stage, the previously produced rosin adduct is esterified with an alcohol. Esterification of the rosin adduct may be performed by means of normal methods, for example, heating of the rosin adduct with a polyhydroxylated alcohol in a closed or open reaction container in the presence or absence of an esterification catalyst and in the presence or absence of a solvent from 150°C to 300°C, preferably from 180°C to 280°C for 1 to 20 hours, preferably 5 to 15 hours.

Normally, during esterification vigorous stirring is conducted in order to prevent carbonisation of the melted polyhydroxylated alcohol which has not reacted and to assist in the elimination of water from the reaction mixture.

If esterification of the rosin adduct with the polyhydroxylated alcohol is performed in the presence of a catalyst, said catalyst is generally present in the range between 0.01 and 2.0 % by weight on the basis of the weight of rosin, preferably between 0.1 and 0.5 % thereof.

Examples of esterification catalysts, to be used if so desired, arc acid catalysts, such as sulphuric acid, acetic acid, phosphoric acid, phosphorous acid, hypophosphorous acid, and p-toluenesulfonic acid, alkaline-earth metal hydroxides, such as calcium hydroxide, metal oxides, such as magnesium oxide and calcium oxide, carbonates, such as calcium carbonate, acetates, such as magnesium acetate and calcium acetate, phosphites and hypophosphites, such as sodium hypophosphite, potassium hypophosphite, barium hypophosphite, ammonium hypophosphite, sodium phosphite, potassium phosphite, calcium phosphite, barium phosphite, ammonium phosphite and similar compounds.

Preferably, the esterification reaction is performed in an inert atmosphere, such as a gaseous nitrogen atmosphere achieved by purging the reaction container with nitrogen prior to the addition of the reagents and spraying with nitrogen during the reaction.

The alcohols used in the esterification of the rosin adduct are polyhydroxylated alcohols, both aromatic, such as pyrocatechol (1,2-benzenediol), resorcinol (1,3-berizenediol), hydroquinone (1,4-benzenediol), or bisphenol A (4,4'-isopropylidendiphenol), and aliphatic. Preferably, the alcohols used in the esterification of the rosin adduct are linear-chain or branched-chain polyhydroxylated alcohols containing 2 to 18 carbon atoms. Suitable alcohols are:
- diols, such as ethylene glycol, diethylene glycol, triethylene glycol, tetraethylene glycol, trimethylene glycol, bisphenol A, pyrocatechol, resorcinol, hydroquinone;
- triols, such as glycerol,
- tetrols, such as pentaerythritol, diglycerol
- hexols, such as manitol, sorbitol and similar polyols.

Those preferred are ethylene glycol, diethylene glycol, triethylene glycol, glycerol , pentaerythritol, manitol and sorbitol. More preferably, the polyhydroxylated alcohols are selected from ethylene glycol, glycerol and pentacrythritol. The alcohols may be used by themselves or in combination.

The alcohol is preferably used in such a quantity that the ratio of the alcohol hydroxyl equivalents to the rosin adduct carboxyl equivalents is in the range between 0.2:1.0 and 1.5:1.0.

Alternatively, the esterification reaction of rosin may be first performed with a polyhydroxylated alcohol, and subsequently the rosin ester thus produced may be grafted with an α,β-unsaturated carboxylic acid or anhydride by means of the Diels-Alder reaction. In this case, the preferred reaction conditions (temperature, catalyst, reagent molar ratios, etc.) are the same as those previously described.

Preferably, the rosin derivatives which are suitable as component (b) of the emulsifier described in this invention, comprise
(i) between 40-95%, preferably between 50-80% by weight of rosin,
(ii) between 5-45%, preferably 15-35% by weight of an α,β-unsaturated carboxylic acid, or mixture thereof,
(iii) between 1-35%, preferably between 5-20% by weight of a polyhydroxylated alcohol or mixture thereof,
provided that the quantities add up to 100%.

### Bituminous emulsions

Aqueous emulsions of bituminous products are well-known to persons skilled in the art and are produced by the emulsification of the bituminous product in water, with the aid of an emulsifying agent, by applying conventional mixing techniques.

The bituminous product may be any of those commonly used in road paving and any other type of construction structures. Amongst others, one may mention bitumen from petroleum distillation, pure or modified with polymers, oxidised and semioxidised bitumens, coal tars, fluidified bitumens, fluxed bitumens and asphalts or asphaltic rocks.

The content of bitumen or bituminous binder in the bituminous emulsions with respect to the total weight of said emulsions is comprised between 20% and 90% by weight, preferably between 40% and 80%, the rest corresponding to the aqueous solution which comprises the emulsifying agent in the invention.

The bituminous products which are normally used to produce bituminous emulsions are characterised in that they exhibit a penetration of between 20 and 500, measured in dmm (tenths of a millimetre) in accordance with the CEDEX road study centre NLT-124/99 test standard.

Likewise, mixtures of the previously described bitumirious products with natural and/or synthetic gums and polymers may be used. Amongst others, one may mention styrene-butadiene copolymers, ethylene-vinyl acetate copolymers, styrene-butadiene-styrene copolymers, as well as natural and/or synthetic rubbers.

Rosin derivatives, in accordance with this invention, exhibit good conditions for the manufacturing of the emulsion. However, the emulsions formed are not stable and they exhibit high sedimentation. Normally, the optimum working pH is between 10.5 and 11.

On the other hand, rheological-grade sepiolite by itself does not exhibit emulsifying properties but, when used together with a rosin derivative in accordance with this invention, in addition to increasing the optimum pH range for saponification, bituminous emulsions are surprisingly produced which have adequate viscosity and a creamy consistency, with an excellent thixotropic and pseudoplastic behaviour, which allows for a great variety in the form of usage, improving the stability thereof and preventing sedimentation and coalescence.

The emulsifier in accordance with this invention may be prepared by mixing the components thereof ((a) and (b)) without any specific order of addition being necessary, for example, 5 minutes in a high-efficiency solids mixer.

In order to use the emulsifier in a bituminous binder, such as, for example, in an anionic bituminous emulsion, the emulsifier may be incorporated in the preparation of the emulsifying water, whereto said bituminous binder will be added. Preferably, said operation is performed in a colloidal mill. The pH of said aqueous solution is between 9.5 and 13.0, preferably between 9.5 and 11.5.

The incorporation of the emulsifier in this invention to bituminous binders in order to form anionic asphaltic emulsions leads to the following characteristics:
- Absence of sedimentation, due to the emulsifier's viscosity-regulating and thixotropic qualities, which contribute to provide homogeneity in the distribution and the size of the bitumen micelles.
- It improves storage, preventing the effects of breakage of the emulsion, due to the high electrochemical stability produced by the emulsifier.
- High stability of the emulsion, due to the emulsifier's viscosity-regulating qualities.
- Possibility to increase the dilution of the emulsion, due to the greater stability of the mixture arising from the improvement of the rheological behaviour caused by the emulsifier.
- Increased coating capacity upon application, duc to the improvement of the thixotropy and plasticity, which allows for greater film thickness.
- Adequate consistency due to the increase in the viscosity-regulating properties offered by the emulsifier, which facilitates application in a large variety of fields.

In anionic emulsions, a base is usually added, such as an alkaline hydroxide, such as sodium or potassium hydroxide, until a pH in the alkaline range is reached, usually between 10 and 12.

Preferably, anionic bituminous emulsions comprise:
i) between 10 and 80%, preferably between 20-60% by weight of an aqueous solution which contains the emulsifier described in this invention
ii) between 20 and 90%, preferably between 80-40% by weight of a bituminous binder.

The quantity of the emulsifier described in this invention (formed by the mixture of component a and component b) to be added to a bituminous binder in order to form a bituminous emulsion will be between 0.01-10% by weight of the 100% emulsifier, preferably between 0.1-5% by weight, with respect to the total weight of said emulsion.

Anionic bituminous emulsions in accordance with this invention may contain other additives, such as anionic latex incorporated i) in the aqueous phase prior to adding the bituminous binder or ii) added once said emulsion is manufactured.

The bituminous emulsions described in this invention are particularly useful in surface waterproofing and in road paving.

The possibility to replace the Vinsol® resin, as an emulsifying product with adequate features to formulate anionic bituminous emulsions, makes it possible to create an alternative and to obtain, in addition to better qualities as compared to the above-mentioned ones, a reduction in the cost of the asphaltic emulsion.

The purpose of the examples below is to provide persons skilled in the art with a sufficiently clear and comprehensive explanation of this invention, but they should not be considered to be limitations of the essential aspects of the invention, as expounded in the preceding sections of this description.

### Examples

### EXAMPLE 1:

A sample of 50 kg of the emulsifier will be prepared in accordance with the invention, by mixing the following components in a high-efficiency solids mixer for 5 minutes:
26 kg of rheological-grade sepiolite from TOLSA, S.A. , Madrid (Spain)
24 kq of rosin derivative from KAO Corporation, S.A., which comprises rosin, glycerol and maleic acid, with the following specifications:
   acidity index : 180-230 mg KOH/g ;
   saponification index: 310-390 mg KOH/g ;
   hydroxyl index: 35-55 mg KOH/g
with a homogeneous product being produced.

### EXAMPLE 2:

Several anionic bituminous emulsions are prepared, either with the rosin derivative or with the emulsifier described in this invention prepared in accordance with Example 1.

Said anionic bituminous emulsions exhibit a content of 60% (percentage over the total emulsion weight) of a paraffinic bituminous binder with a 140/160 penetration, classified on the basis of the penetration characteristics thereof measured in dmm (tenths of a millimetre) in accordance with the CEDEX road study centre NLT-124/99 test standard. This standard defines penetration as the distance, expressed in tenths of a millimetre, which a standardised needle vertically penetrates into the bitumen when the test is performed at 25°C, for 5 seconds and with a total moving load, including the needle, of 100 grams.

The aqueous phases (40% with respect to the total emulsion weight) are produced by adding sodium hydroxide in water and subsequent addition of the emulsifier prepared in accordance with example 1 , adjusting the pH to 10. Preparation of the aqueous phase is performed between 45°C and 50°C.

The bituminous emulsions are prepared by mixing the aqueous phases and the bituminous binder in an ATOMIX brand laboratory colloidal mill at 9,000 rpm, at temperatures of, respectively, 45°C and 145°C.

The bituminous emulsions are produced at a temperature of between 80°C and 90°C.

The characteristics of the emulsions are listed in the following table:

**TABLE 1**

| Sample | Paraffinic bitumen (%) | Emulsifying water | | | |
|---|---|---|---|---|---|
| | | pH | Water (%) | Rosin derivative (%) | Invention emulsifier (%) |
| I | 60 | 10 | 39.05 | 0.95 | 0 |
| II | 60 | 10 | 38.50 | 1.5 | 0 |
| III | 60 | 10 | 38.05 | 0 | 1.95 |

All the bituminous emulsions prepared (samples I, II and III) were allowed to cool down to ambient temperature. The following tests were performed: sieving (in accordance with the CEDEX NLT 142/99 standard), evaporation residue (in accordance with the CEDEX NLT 147/91 standard), stability with cement (in accordance with the CEDEX NLT 144/98 standard), sedimentation at 7 days (in accordance with the CEDEX NLT 140/99 standard) and 5 rpm Brookfield viscosity (spindle 2, 25° C).

Their properties meet the specifications of EAL-2-type anionic bituminous emulsions, collected in the Memorandum of General Technical Requirements for Road Works, PC-3, approved by Order of 6 February, 1976, of the Ministry of Public Works of Spain, the effective drafting whereof is dated 27 December, 1999 (Official State Gazette [B.O.E.] of 22 January, 2000).

The results are shown in the following table:

**TABLE 2**

| Sample | Sieving (%) | Evaporation residue (%) | Stability wich cement (%) | Sedimentation at 7 days (%) | 5 rpm Brookfield Viscosity (mPa s) |
|---|---|---|---|---|---|
| I | 0.07 | 60.1 | 0.0 | 18.0 | 200 |
| II | 0.01 | 61.3 | 0.2 | 19.3 | 520 |
| III | 0.03 | 61.5 | 0.3 | 0.1 | 1,800 |
| Specifica tions | 0.10 (maximum) | 60 (minimum) | 2 (maximum) | 5 (maximum) | --- |

On the basis of the results obtained, one can observe that the rosin derivative by itself is not capable of controlling sedimentation, even when its concentration is increased, whilst the sample obtained with the emulsifier described in this invention remains completely stable. Thus, one can observe the synergic effect developed by the mineral component (a) and the rosin derivative (b) upon working together, since the mineral component does not exhibit emulsifying properties by itself and the rosin derivative also is not capable, by itself, of maintaining stable mixtures.

### EXAMPLE 3:

Two samples of anionic bituminous emulsions were prepared, one with a conventional emulsifier (Vinsol®, a resin commercialised by Hércules), and the other with the emulsifier described in this invention prepared in accordance with Example 1. Said samples were prepared in accordance with Example 2, except that the bituminous emulsion produced with the conventional emulsifier was taken to pH 12, which is the typical working value for the Vinsol® resin, since at lower pH values stable emulsions and/or emulsions with the required properties are not produced. The characteristics of the emulsions are listed in the following table:

**TABLE 3**

| Sample | Paraffinic bitumen | Emulsifying water | | | |
|---|---|---|---|---|---|
| | | pH | Water (%) | Conventional emulsifier (%) | invention emulsifier (%) |
| IV | 60 | 12 | 39.05 | 0.95 | 0 |
| V | 60 | 10 | 38.05 | 0 | 1.95 |

All the bituminous emulsions prepared (samples IV and V) were allowed to cool down to ambient temperature. Sieving, evaporation residue, stability with cement, sedimentation at 7 days, and 5-rpm Brookfield viscosity (spindle 2, 25° C) tests were conducted. Finally, the properties thereof were checked to determine whether or not they meet the specifications of EAL-2-type anionic bituminous emulsions. The results are shown in the following table:

**TABLE 4**

| Sample | Sieving (%) | Evaporation residue (%) | Stability with cement (%) | Sedimentation 01. 7 days (%) | 5 rpm Brookfield Viscosity (mPa s) |
|---|---|---|---|---|---|
| TV | 0.01 | 61.8 | 0.6 | 3.2 | 240 |
| V | 0.03 | 61.5 | 0.3 | 0.1 | 1,800 |
| Specific ations | 0.10 (maximum) | 60 (minimum) | 2 5 (maximum) | (maximum) | --- |

Table 4 shows the results, which compare a sample whereto a conventional emulsifier has been added (Vinsol® resin) with another wherein the new emulsifier described in this invention has been used. One can verify that the new emulsifier exhibits a better behaviour, very particularly in relation to sedimentation.

### EXAMPLE 4:

Several anionic bituminous emulsions were prepared, either with the rosin derivative or with the emulsifier described in this invention prepared in accordance with Example 1. Said bituminous emulsions were prepared in accordance with Example 2, except that naphthenic bitumen with a 150/200 penetration was used. The characteristics of the emulsions are listed in the following table:

**TABLE 5**

| Sample | Naphthenic bitumen (%) | Emulsifying water | | | |
|---|---|---|---|---|---|
| | | pH | Water (%) | Rosin derivative (%) | Invention emulsifier (%) |
| VI | 60 | 10.2 | 39.2 | 0.8 | 0 |
| VII | 60 | 10.1 | 38.5 | 1.5 | 0 |
| VIII | 60 | 10.3 | 38.3 | 0 | 1.7 |

All the bituminous emulsions prepared (samples VI, VII and V) were allowed to cool down to ambient temperature. Sieving, evaporation residue, stability with cement, sedimentation at 7 days, and 5-rpm Brookfield viscosity (spindle 2, 25° C) tests were conducted. Finally, the properties thereof were checked to determine whether or not they meet the specifications of EAL-2-type anionic bituminous emulsions. The results are shown in the following table:

**TABLE 6**

| Sample | Sieving (%) | Evaporation residue (%) | Stability with cement (%) | Sedimentation at 7 days (%) | 5 rpm Brookfield Viscosity (mPa s) |
|---|---|---|---|---|---|
| VI | 0.15 | 62.2 | 1.5 | 15.8 | 260 |
| VII | 0.24 | 62.4 | 0.1 | -3.6 | 680 |
| VIII | 0.07 | 62.2 | 0.2 | 0.0 | 580 |
| Specif icatio ns | 0.10 (maximum) | 60 (minimum) | 2 (maximum) | 5 (maximum) | --- |

By analysing the results shown in the preceding table, one can observe that the dosage of rosin derivative used in sample VI is not sufficient Lo achieve emulsions which meet the prevailing regulations, since the sieve value is slightly higher than the permitted one and the sedimentation is much higher. Upon increasing the dosage of the rosin derivative, as in sample VII, it is also not possible to form emulsions which meet the specifications, since, although the sedimentation results are clearly improved, the si.eve values are worse. Sample VIII, which contains the new emulsifier described in this invention, provides clearly distinct results with respect to the above, mitigating the negative effects caused by the rosin derivative.

### EXAMPLE 5:

Two samples of anionic bituminous emulsions were prepared, one with a conventional emulsifier (Vinsol®), a resin commercialised by Hércules), and the other with the emulsifier described in this invention prepared in accordance with Example 1. Said samples were prepared in accordance with Example 3. The characteristics of the emulsions are listed in the following table:

**TABLE 7**

| Sample | 150/200 naphthenic bitumen (%) | Emulsifying water | | | |
|---|---|---|---|---|---|
| | | pH | Water (%) | Conventional emulsifier (%) | Invention emulsifier (%) |
| IX | 60 | 12.6 | 39.05 | 0.95 | 0 |
| X | 60 | 10.1 | 38.50 | 0 | 1.50 |

All the bituminous emulsions prepared (samples IX and X) were allowed to cool down to ambient temperature. Sieving, evaporation residue, stability with cement, sedimentation at 7 days, and 5-rpm Brookfield viscosity (spindle 2, 25° C) tests were conducted. Finally, the properties thereof were checked to determine whether or not they meet the specifications of EAL-2-type anionic bituminous emulsions. The results arc shown in the following table:

**TABLE 8**

| Sample | Sieving (%) | Evaporation residue (%) | Stability with cement (%) | Sedimentation at days (%) | 5 rpm Brookfield Viscosity (mPa s) |
|---|---|---|---|---|---|
| IX | 0.07 | 81.9 | 0.5 | 1.5 | 260 |
| X | 0.04 | 62.0 | 0.3 | -0.4 | 460 |
| Specifi cations | 0.10 (maximum) | 60 (minimum) | 2 (maximum) | 5 (maximum) | --- |

Table 8 shows the results, which compare a sample whereto a conventional emulsifier (Vinsol® resin) has been added, with another wherein the new emulsifier described in this invention has been used, it being observed that the new emulsifier developed in the invention, in addition to good technical features, behaves particularly well in relation to sedimentation.

## Claims

1. Emulsifying agent designed to form anionic bituminous emulsions, **characterised in that** it comprises a mixture of:
(a) at least, a solid mineral component from the phyllosilicate group, and
(b) at least, a rosin derivative.

2. Emulsifying agent according to claim 1,
**characterised in that** the mineral component (a) is selected from the rheological-grade clays bentonite or montmorillonite, attapulgite, diatomite, sepiolite and mixtures thereof.

3. Emulsifying agent according to claims 1 and 2,
**characterised in that** the mineral component (a) is rheological-grade sepiolite.

4. Emulsifying agent according to claims 1 to 3,
**characterised in that** the rosin derivative (b) is obtainable by
(i) Diels-Alder reaction between rosin and an α,β-unsaturated carboxylic acid or anhydride, and
(ii) esterification reaction between the adduct formed in (i) and a polyhydroxylated alcohol.

5. Emulsifying agent according Lo claims 1 to 4,
**characterised in that** the rosin is selected from pine resin rosin, wood rosin and "tall-oil" rosin.

6. Emulsifying agent according to claim 4,
**characterised in that** the α,β-unsaturated carboxylic acid or anhydride is selected from the group consisting of fumaric acid and the hemiesters thereof, maleic acid or anhydride and the hemiesters thereof, acrylic acid, methacrylic acid, and related acrylic and arylic acids, itaconic acid or anhydride, oligomers and copolymers of acrylic compounds and vinyls with ethylenically unsaturated acids; preferably, is an α,β-unsaturated dicarboxylic acid or anhydride; more preferably is fumaric acid, maleic acid, maleic anhydride or a mixture thereof.

7. Emulsifying agent according to claim 4, wherein the polyhydroxylated alcohol is selected from the group consisting of ethylene glycol, diethylene glycol, triethylene glycol, tetraethylene glycol, trimethylene glycol, bisphenol A, pyrocatechol, resorcinol, hydroquinone, glycerol, pentaerythritol, diglycerol, manitol, sorbitol and combinations thereof; preferably is ethylene glycol, diethylene glycol, triethylene glycol, glycerol, pentaerythritol, manitol or sorbitol or mixtures thereof.

8. Emulsifying agent according to claims 1 to 7,
**characterised in that** the rosin derivative (b) comprises:
(i) between 40-95%, preferably between 50-80% by weight of rosin,
(ii) between 5-45%, preferably between 15-35% by weight of an α, β-unsaturated carboxylic acid or anhydride or a mixture thereof,
(iii) between 1-35%, preferably between 5-20% by weight of a polyhydroxylated alcohol or mixture thereof.
provided that the quantities add up to 100%.

9. Emulsifying agent according to claims 1 to 8,
**characterised in that** it comprises between 20 and 75% by weight of the mineral component (a) and between 25 and 80% by weight of rosin derivative (b).

10. Emulsifying agent according to claim 9,
**characterised in that** it comprises between 35 and 60% by weight of the mineral component (a) and between 40 and 65% by weight of the rosin derivative.

11. Process for preparing an emulsifying agent as the one defined in claims 1 to 10 which comprises the physical mixing of components (a) and (b) in a high-efficiency solids mixer.

12. Use of an emulsifying agent as the one defined in claims 1 to 10 as a suspension, stability and thickening agent in anionic bituminous emulsion formulations.

13. Aqueous solution which comprises the emulsifying agent according to any of claims 1 to 10, wherein the pH is comprised between 9.5 and 13.0, preferably between 9.5 and 11.5.

14. Use of an aqueous solution according to claim 13 as an emulsifier for bituminous binders.

15. An anionic bituminous emulsion, **characterised in that** it comprises an emulsifying agent according to claims 1 to 10.

16. An anionic bituminous emulsion, according to claim 15, **characterised in that** it comprises:
i) between 10 and 80%, preferably between 20-60% by weight of an aqueous solution according to claim 13, and
ii) between 20 and 90%, preferably between 40 and 80% by weight of a bituminous binder.

17. An anionic bituminous emulsion, according Lo claims 15 and 16, **characterised in that** it comprises between 0.01-10% by weight, preferably between 0.1-5% by weight of an emulsifying agent according to claims 1 to 10, with respect to the total weight of said emulsion.

18. Use of an anionic bituminous emulsion, according to claims 15 to -17, for road paving.

19. Use of an anionic bituminous emulsion, according to claims 15 to 17, for surface waterproofing.
